Europäisches Patentamt

European Patent Office

Office européen des brevets

(11) Publication number: 0 404 541 A2

# EUROPEAN PATENT APPLICATION

(21) Application number: 90306726.2

(51) Int. Cl.5: G06F 15/21

(22) Date of filing: 20.06.90

(30) Priority: 20.06.89 AU 4828/89

(43) Date of publication of application:
27.12.90 Bulletin 90/52

(84) Designated Contracting States:
AT BE CH DE DK ES FR GB GR IT LI LU NL SE

(71) Applicant: Tunbridge, Max
860 Pacific Highway
Gordon, New South Wales 2072(AU)

Applicant: Kwong, Allen
41 Yarrara Road
West Pymble, New South Wales 2073(AU)

(72) Inventor: Tunbridge, Max
860 Pacific Highway
Gordon, New South Wales 2072(AU)
Inventor: Kwong, Allen
41 Yarrara Road
West Pymble, New South Wales 2073(AU)

(74) Representative: Skone James, Robert Edmund
et al
GILL JENNINGS & EVERY 53-64 Chancery
Lane
London WC2A 1HN(GB)

(54) Method of cost assessing damaged vehicles.

(57) A portable apparatus 10 to aid in assessing the cost of repairing damaged vehicles, said apparatus 10 including a body 11 which receives a digitising pad 20 and a computer 21. The pad 20 and computer 21 are operatively associated so that signals generated by the pad 20 are received by the computer 21, which computer 21 then stores information indicative of those signals. Applied to the pad 20 is an illustration of a portion of a motor vehicle, with the illustration 14 containing target areas 15 indicative of parts of the vehicle. When the user applies pressure to the target area 15 , the pad 20 generates a signal indicative of the vehicle part. The computer 21 then can generate a code and associated description that represents the activities of repairing, painting, removing and replacing, and supplying automobile components to achieve the damaged rectification.

FIG.2

The present invention relates to a method of collecting and storing information relative to a method of cost assessing the repairs in respect of a damaged vehicle.

## Background Art

In assessing the cost of repairing an acident damaged vehicle, it is known to provide the assessor with a sheet which contains a list of body parts. The assessor then indicates on the sheet which body parts are to be repaired and/or replaced. This also applies to mechanical parts.

The total cost is then calculated by compiling the cost of the items indicated.

The above discussed assessing method is generally time consuming and therefore expensive. It also lacks a certain degree of accuracy in that not all items may be listed.

In an attempt to ameliorate the disadvantages with the above discussed method, computers are frequently employed. For example US Patent 4,899,292 discloses a computerised system for storing and retrieving document text, relative to an insurance estimation system. In this insurance estimation system, the system displays a graphic image of a vehicle or other object. By means of a touch screen, damaged parts are identified. A local or remote processor determines the cost of correcting the damage of the identified part.

The above discussed computerised system has the disadvantage that it is is "office bound" and is not mobile. It requires the collection of information, usually in written form, which then can be transferred into the computer by the touch screen. Accordingly it suffers from the inherent disadvantages of the previously discussed manual method of itemising the damaged parts of the vehicle. It is easy for items to be overlooked.

## Object of the Invention

It is the object of the present invention to overcome or substantially ameliorate the above disadvantages.

## Disclosure of the Invention

There is disclosed herein a portable apparatus to aid in assessing the cost of repairing damaged vehicles, said apparatus comprising:
a body;

a digitising pad mounted externally on said body;
at least one sheet containing an image of at least a portion of a vehicle, said sheet being adapted to be mounted on said pad in a predetermined orientation and position relative thereto, said image including areas to which pressure is applied to have a corresponding area in said pad generate a signal indicative of the vehicle part identified by the sheet area; and
a programmable computer mounted in said body and operatively associated with said pad so as to receive signals from said pad to record information relative to the sheet areas to which pressure has been applied.

Preferably the above described portable apparatus is adapted to be hand held and the computer is programmed to prompt the user to consider sheet areas not initially nominated by pressure being applied thereto, but which are associated with nominated sheet areas.

## Brief Description of the Drawings

A preferred form of the present invention will now be described by way of example with reference to the accompanying drawings, wherein:
Figure 1 is a schematic illustration of a piece of sheet material which provides an image of the front portion of a motor vehicle; and

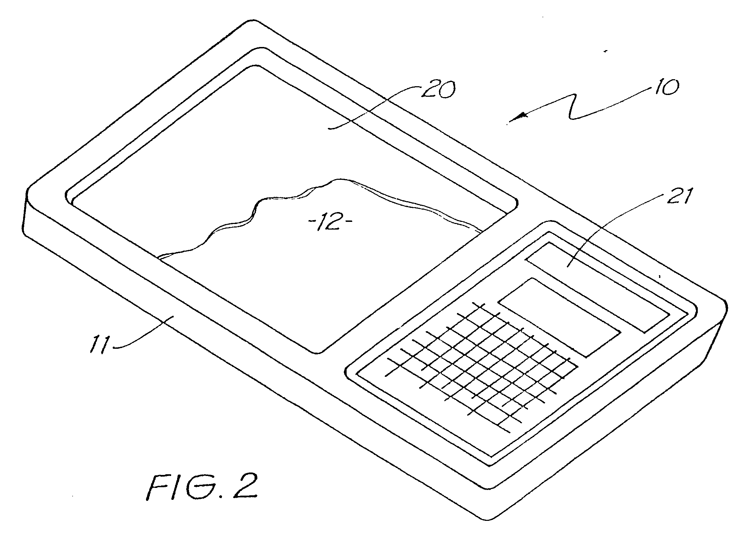

Figure 2 is a schematic perspective view of an apparatus to aid in assessing the cost of repairing damaged vehicles.

In the accompanying drawings there is schematically depicted a portable apparatus 10 to aid in assessing the cost of repairing damaged vehicles.

The apparatus 10 includes a body 11 which provides a generally planar surface 12. The body 11 is adapted to be hand held with the surface 12 facing upward.

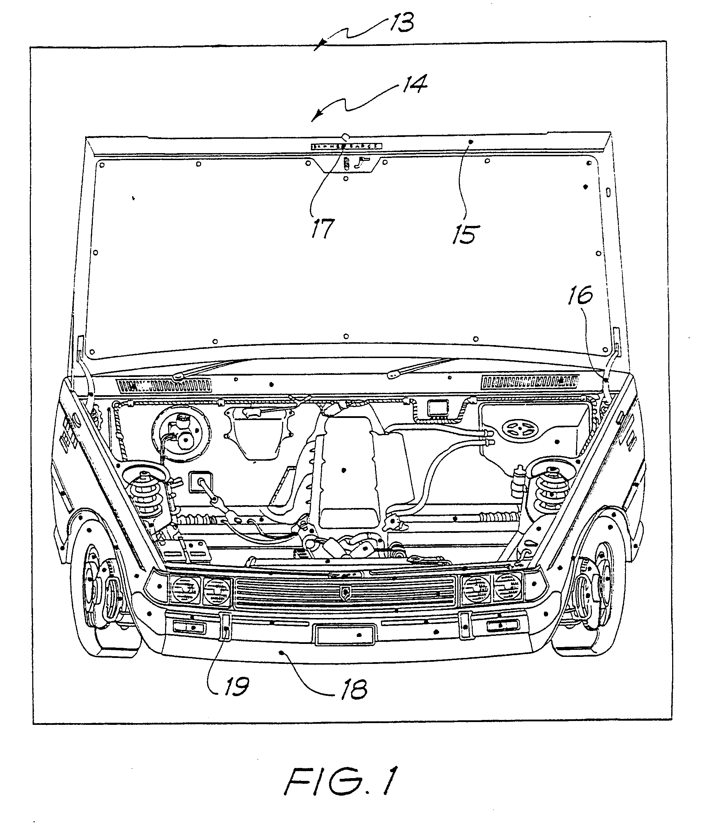

The surface 12 is adapted to receive a sheet 13 (Figure 1). The sheet 13 has an image 14 of at least a portion of a motor vehicle. In this particular example, the front of the vehicle is illustrated. The illustration contains images of the various parts of the front of the motor vehicle, with each part provided with a "target" area. In this particular embodiment, there are target areas 15 to 19 illustrated. The motor vehicle bonnet is provided with the target area 15 while the bonnet badge is provided with target area 17. The bonnet hinges are provided with target are 16 while the front bumper and "over riders" are provided with target areas 18 and 19.

To be located between the surface 12 and the sheet 13 is a digitising pad 20 which is operatively associated with a programmable computer 21 also mounted in the body 11.

The sheet 13 is mounted on the pad 20 and is retained in a particular orientation and position relative thereto.

In operation of the above described device 10, the user applies pressure to one or more of the target areas. This pressure activates the pad 20 to generate a signal indicative of the target area. For example, if the user applied pressure to the target area 15, the pad 20 would generate a signal indicative of the location of the target area on the pad 20. This then correlates to identifying the vehicle bonnet. The signals are received by the computer 21 which stores the information for later transfer to a suitably programmed computer system which would have information in respect of part numbers, the times required to remove and replace various parts and the costs associated with those activities.

Preferably the computer 21 would be programmed to prompt the user to consider other target areas. For example, if the operator indicated that the bonnet 15 needed to be replaced, the computer 21 would generate a signal prompting the user to consider whether the hinges 16 and the badge 17 require replacement. The user would then inspect these parts and apply pressure to the target areas 16 and 17 if appropriate. The computer 21 would also prompt the user to determine whether or not the bonnet required painting. As a further example, if the user indicates that the bumper 18 requires replacement, the computer would prompt the user to consider replacement of the "over riders" 19 as well as other associated parts such as mounting brackets for the bumper.

When using the apparatus 10, the computer 21 would be manipulated so as to identify the particular vehicle being inspected.

As can be seen by the above, the computer 21 can be used to generate a code and associated description that represents the actions of repairing, painting, removing and replacing, and supplying automobile components to achieve damaged rectification.

Depending on whether painting/repairing activities are indicated, the computer 21 will then prompt for those activity times.

At the completion of the vehicle examination, and the input, the computer 21 will be prompted for supplementary information on related repair activities which may have been overlooked.

Still further, the computer 21 could be operated to store the particulars of the owner and the vehicle as well as details identifying the vehicle.

## Claims

1. A portable apparatus (10) to aid in assessing the cost of repairing damaged vehicles, said apparatus (10) comprising:

a body (11);

a digitising pad (20) mounted externally on said body (11);

at least one sheet (13) containing an image (14) of at least a portion of a vehicle, said sheet (13) being adapted to be mounted on said pad (20) in a predetermined orientation and position relative thereto, said image (14) including areas (15) to which pressure is applied to have a corresponding area in said pad (20) generate a signal indicative of the vehicle part identified by the sheet area (15); and

a programmable computer (21) mounted in said body (11) and operatively associated with said pad (20) so as to receive signals from said pad (20) to record information relative to the sheet areas (15) to which pressure has been applied.

2. The apparatus (10) of claim 1, wherein said computer (21) is adapted to provide a visual image to prompt the user to consider activity times in respect of the painting and/or repairing of various parts of the vehicle illustrated and to consider repair activities which may have been overlooked and associated with sheet areas (15) already nominated.

3. The apparatus (10) of claim 1, wherein there is a plurality of sheets (13) provided, with each sheet (13) providing an illustration (14) of a portion of a vehicle.

FIG.1

10

20

21

-12-

11

FIG.2